# EUROPÄISCHE PATENTSCHRIFT

(11) **EP 3 146 358 B1**
(45) Veröffentlichungstag und Bekanntmachung des Hinweises auf die Patenterteilung: **15.11.2023**
(21) Anmeldenummer: 15739254.9
(22) Anmeldetag: 16.07.2015
(51) Int. Cl.: G01S 13/93, G01S 7/41, G01S 15/93, G01S 17/93, G01S 13/88, G01S 7/40

(54) **VERFAHREN ZUR ORTUNG UND ZUR POSITIONIERUNG SOWIE ORTUNGSSYSTEM, LADESTATION UND LADESYSTEM**
METHOD FOR LOCATING AND POSITIONING, AS WELL AS LOCATING SYSTEM, CHARGING UNIT AND CHARGING SYSTEM
PROCÉDÉ DE LOCALISATION ET DE POSITIONNEMENT ET SYSTÈME DE LOCALISATION, STATION DE CHARGE ET SYSTÈME DE CHARGE

(30) Priorität: 20.08.2014 DE 102014216525
(43) Veröffentlichungstag der Anmeldung: 29.03.2017
(73) Patentinhaber: Siemens Aktiengesellschaft, 80333 München (DE)
(72) Erfinder: HEUER, Jörg, 82041 Oberhaching (DE); SCHMITT, Anton, 85591 Vaterstetten (DE); ZHANG, Xi, 81479 Muenchen (DE)
(74) Vertreter: Siemens Patent Attorneys
(86) Internationale Anmeldenummer: PCT/EP2015/066290
(87) Internationale Veröffentlichungsnummer: WO 2016/026624

(56) Entgegenhaltungen:
- DE-A1- 19 756 706
- DE-A1-102010 027 670
- DE-A1-102011 007 771
- US-A- 5 819 164
- US-A- 6 081 223
- US-A1- 2005 163 511

## Beschreibung

Die Erfindung betrifft ein Verfahren zur Ortung eines bestimmten Objekts, ein Verfahren zur Positionierung eines Elektrofahrzeugs an einer Ladestation, ein Ortungssystem, eine Ladestation sowie ein Ladesystem.

Zum Laden eines Elektrofahrzeugs an einer Ladestation ist das Elektrofahrzeug regelmäßig geeignet an der Ladestation zu positionieren.

Zur Positionierung von Objekten, etwa Containern oder Fahrzeugen, ist es bekannt, Ortungsverfahren, beispielsweise in der Form einer Laserortung oder einer Radarortung, einzusetzen.

Dabei werden Laufzeitmessungen genutzt und/oder Konzepte, welche auf FMCW-Konzepten (FMCW: engl.: "frequency modulated continuous wave") beruhen. Beim Einsatz solcher Konzepte muss regelmäßig die Form der Objekte berücksichtigt werden um eine zuverlässige Ortung durchführen zu können. Zudem beeinträchtigen häufig Reflektionen die Zuverlässigkeit und Genauigkeit der Ortung. Eine besondere Herausforderung besteht stets in der zuverlässigen Identifizierung des zu ortenden Objekts.

Das Dokument US 6 081 223 A offenbart ein Radarsystem in einem Fahrzeug, sowie einen Reflektor auf einer Infrastruktur entlang der Straße, der das reflektierte Signal mittels einer variablen Reflexionseigenschaft mit zusätzlichen Informationen moduliert.

Das Dokument DE 10 2010 027670 A1 offenbart eine Ladestation für ein Fahrzeug mit Erkennung des Ladeanschlusses und die Positionierung der Steckereinheit der Ladestation am Ladeanschluss.

Das Dokument US 2005/163511 A1 offenbart die Identifizierung eines Fahrzeuges mittels eines optischen Tags, das einen reflektierten Lichtstrahl mit einem Code moduliert.

Es ist daher Aufgabe der Erfindung, ein gegenüber dem Stand der Technik verbessertes Verfahren zur Ortung eines bestimmten Objekts bereitzustellen. Ferner ist es Aufgabe der Erfindung, ein gegenüber dem Stand der Technik verbessertes Verfahren zur Positionierung eines Elektrofahrzeugs an einer Ladestation, ein gegenüber dem Stand der Technik verbessertes Ortungssystem zur Ortung eines Objekts, eine gegenüber dem Stand der Technik verbesserte Ladestation sowie ein gegenüber dem Stand der Technik verbessertes Ladesystem bereitzustellen.

Diese Aufgabe wird mit einem Verfahren zur Ortung eines bestimmten Objekts mit den in Anspruch 1 angegebenen Merkmalen, mit einem Verfahren zur Positionierung eines Elektrofahrzeugs an einer Ladestation mit den in dem abhängigen Anspruch 10 angegeben Merkmalen, mit einem Ortungssystem mit den in dem unabhängigen Anspruch 11 angegebenen Merkmalen, mit einer Ladestation mit den in dem abhängigen Anspruch 13 angegebenen Merkmalen sowie mit einem Ladesystem mit den in dem abhängigen Anspruch 14 angegebenen Merkmalen gelöst. Bevorzugte Weiterbildungen der Erfindung ergeben sich aus den weiteren zugehörigen Unteransprüchen, der nachfolgenden Beschreibung und der Zeichnung.

Das erfindungsgemäße Verfahren zur Ortung eines bestimmten Objekts ist ein Verfahren zur Ortung des Objekts mittels eines erfassten Ortungssignals. Bei dem erfindungsgemäßen Verfahren wird eine Ortung genau dieses Objekts derart geprüft, dass als Objekt ein solches mit zumindest einer zeitlich variablen Reflexionseigenschaft herangezogen und ein Einfluss dieser Reflexionseigenschaft auf das erfasste Ortungssignal geprüft wird. Erfindungsgemäß kann das Objekt folglich mittels der zeitlich variablen Reflexionseigenschaft gekennzeichnet werden und derart gekennzeichnet bei der Ortung eindeutig erkannt werden.

Bevorzugt ist bei dem erfindungsgemäßen Verfahren die Ortung eine Funkortung oder eine Laserortung oder eine akustische Ortung. Diese genannten Ortungsverfahren sind hinlänglich bekannt und zur Ortung intensiv erprobt. Vorteilhafterweise basieren die vorgenannten Verfahren auf Messungen der Signallaufzeit. Die Messung der Signallaufzeit erfolgt vorzugsweise nach aus der Literatur bekannten Verfahren. Geeigneterweise erfolgt die Messung der Signallaufzeit durch Betrachtung der komplexwertigen Phase des Spektrums des empfangenen Signals oder/und basierend auf FMCW.

In einer bevorzugten Weiterbildung des erfindungsgemäßen Verfahrens ist die zeitlich variable Reflexionseigenschaft eine zeitlich periodische Reflexionseigenschaft. In dieser Weiterbildung der Erfindung schlägt sich die zeitlich periodische Reflexionseigenschaft geeigneterweise in einer solchen Modulation des Ortungssignals wieder, die sich in einem Spektrum des Ortungssignals leicht anhand zusätzlicher Spektralanteile erkennen lässt. Dies ist besonders einfach erkennbar, wenn diese Spektralanteile eine oder mehrere diskrete hinzutretende Frequenzen aufweisen oder bei einer oder mehreren, zumindest nahezu, diskreten Frequenzen liegen.

Zweckmäßig ist bei dem erfindungsgemäßen Verfahren die zeitlich variable Reflexionseigenschaft mittels einer oszillierend ausgelenkten Reflexionsfläche gebildet. Auf diese Weise lässt sich die zeitlich variable Reflexionseigenschaft besonders leicht mechanisch, etwa mittels eines elektrisch ansteuerbaren piezoelektrischen Oszillators oder eines Linearaktuators, realisieren. Insbesondere lässt sich die zeitlich variable Reflexionseigenschaft mittels eines modularen Zusatzteils realisieren, welches mit einem weiteren Teil zusammenwirkend das Objekt bildet. Dazu lässt sich das Zusatzteil einfach an dem weiteren Teil anordnen.

Geeigneterweise ist bei dem erfindungsgemäßen Verfahren die zeitlich variable Reflexionseigenschaft mittels zumindest einer oszillatorischen oder rotatorischen Bewegung zumindest eines Teils, insbesondere einer Oberfläche, des Objekts gebildet. Vorteilhaft kann ein reflektierender Rotor an der Oberfläche des Objekts vorhanden sein.

Vorzugsweise ist bei dem erfindungsgemäßen Verfahren die zeitlich variable Reflexionseigenschaft mittels einer Bewegung eines piezoelektrischen Oszillators oder eines Linearaktors gebildet. Gerade in dieser Weiterbildung des erfindungsgemäßen Verfahrens lässt sich die zeitlich variable Reflexionseigenschaft mittels eines modularen Zusatzteils realisieren, welches mit einem weiteren Teil zusammenwirkend das Objekt bildet. Dazu kann das Zusatzteil einfach an dem weiteren Teil angeordnet werden. Piezoelektrische Keramiken piezoelektrischer Oszillatoren sind zudem gegenüber Witterungseinflüssen robust und können zudem sehr flach ausgelegt werden. Insbesondere derart ausgebildete Zusatzteile lassen sich daher als wenig anfällig gegenüber Witterungseinflüssen oder Fahrtbedingungen, wie sie insbesondere bei Elektrofahrzeugen auftreten, ausbilden.

Bevorzugt ist bei dem erfindungsgemäßen Verfahren die Ortung eine Funkortung, und zwar eine Radarortung, und/oder das Ortungssignal ein Radarsignal und/oder das Objekt mit, insbesondere aus, Metall gebildet. Gerade Metallobjekte lassen sich mittels Radarortung leicht orten. Insbesondere ist die Ortung von mit Metall gebildeten Objekten, vorzugsweise etwa von Elektrofahrzeugen, ökonomisch besonders bedeutsam.

In einer bevorzugten Weiterbildung des erfindungsgemäßen Verfahrens wird der Einfluss auf das Ortungssignal spektral geprüft.

In geeigneter Weiterbildung wird bei dem erfindungsgemäßen Verfahren der Einfluss der variablen Reflexionseigenschaft im Bereich einer Frequenz oder von Frequenzen von mindestens 300 Hz, vorzugsweise höchstens 1 MHz, auf das Ortungssignal geprüft. Diese Frequenzen sind bereits gegenüber typischerweise im Alltag, insbesondere beim elektrischen Laden, bei Bewegungen auftretenden Frequenzen vergleichsweise hoch, sodass mittels der vorgenannten Frequenzen eine zuverlässige Erkennung des Objekts erfolgen kann. Insbesondere können Frequenzen, die durch andere bewegte Objekte erzeugt werden könnten, zuverlässig ausgeschlossen werden. Zweckmäßigerweise werden die Frequenzen zeitlich stabil gehalten. Auf diese Weise lässt sich der Einfluss der variablen Reflexionseigenschaft besonders genau bestimmen.

In einer vorteilhaften Weiterbildung wird bei dem erfindungsgemäßen Verfahren als Objekt ein Objekt herangezogen, welches mit einem Elektrofahrzeug gebildet ist oder ein Elektrofahrzeug ist.

Bei dem erfindungsgemäßen Verfahren zur Positionierung eines Elektrofahrzeugs an einer Ladestation wird eine Position des Elektrofahrzeugs mittels eines Verfahrens zur Ortung nach einem der vorhergehenden Ansprüche erfasst, wobei das Objekt zumindest einen Teil des Elektrofahrzeugs umfasst und/oder zumindest zum Teil an dem Fahrzeug angeordnet ist. Auf diese Weise kann bei der Durchführung des erfindungsgemäßen Verfahrens vorab geprüft werden, ob das Elektrofahrzeug überhaupt erfasst wird. Wird festgestellt, dass das Elektrofahrzeug gegenwärtig nicht erfasst wird, so kann, zweckmäßig über eine Benutzerschnittstelle, ein Fahrzeugführer angehalten werden, eine vorbestimmte Sollposition zur Durchführung der erfindungsgemäßen Verfahrens zur Positionierung des Elektrofahrzeugs einzunehmen. Von dieser Sollposition aus kann dann das erfindungsgemäße Verfahren zur Ortung eine feiner aufgelöste Positionierung des Elektrofahrzeugs zum Laden des Elektrofahrzeugs unterstützen.

Das erfindungsgemäße Ortungssystem weist einen Ortungssensor zur Ortung eines Objekts mittels eines vom Ortungssensor erfassten Ortungssignals sowie eine Auswerteinrichtung auf. Erfindungsgemäß ist die Auswerteinrichtung ausgebildet, einen Einfluss einer zeitlich variablen Reflexionseigenschaft des Objekts auf das vom Ortungssensor erfasste Ortungssignal zu prüfen.

In einer bevorzugten Weiterbildung ist bei dem erfindungsgemäßen Ortungssystem die Auswerteinrichtung ausgebildet, den Einfluss der variablen Reflexionseigenschaft wie er bei der Durchführung eines erfindungsgemäßen Verfahrens zur Ortung eines bestimmten Objekts wie zuvor beschrieben geprüft wird, zu prüfen.

Die erfindungsgemäße Ladestation zum Laden eines Elektrofahrzeugs umfasst zur Positionierung des Elektrofahrzeugs ein Ortungssystem wie zuvor beschrieben, wobei die Ladestation vorzugsweise zum induktiven Laden des Elektrofahrzeugs ausgebildet ist.

Das erfindungsgemäße Ladesystem weist eine Ladestation wie zuvor beschrieben und einem Kennzeichnungselement auf. Das Kennzeichnungselement weist, insbesondere periodisch, relativ zueinander bewegliche Teile auf. Die zueinander beweglichen Teile sind insbesondere zueinander rotatorisch, etwa in der Art einer Nabe und eines um diese Nabe rotierenden Rotors, oder oszillatorisch beweglich. In einer besonders vorteilhaften Weiterbildung sind die Teile ein eingespanntes und ein freies Ende eines Oszillators, insbesondere eines piezoelektrischen Oszillators.

Bevorzugt weist bei dem erfindungsgemäßen Ladesystem das Kennzeichnungselement einen, insbesondere piezoelektrischen, Oszillator auf, welcher mit einer Oszillationsfrequenz, insbesondere von mindestens 300 Hz, schwingt.

Nachfolgend wird die Erfindung anhand eines in der Zeichnung dargestellten Ausführungsbeispiels näher erläutert. Es zeigen:
- Fig. 1: ein erfindungsgemäßes Ladesystem mit einer erfindungsgemäßen Ladestation zur Ausführung des erfindungsgemäßen Verfahrens zur Positionierung eines Elektrofahrzeugs an dieser Ladestation sowie das Elektrofahrzeug schematisch in einer perspektivischen Darstellung sowie
- Fig. 2: ein Spektrum eines von einem Ortungssensor der Ladestation gem. Fig. 1 erfassten Ortungssignals bei der Ausführung des erfindungsgemäßen Verfahrens diagrammatisch in einer Prinzipskizze.

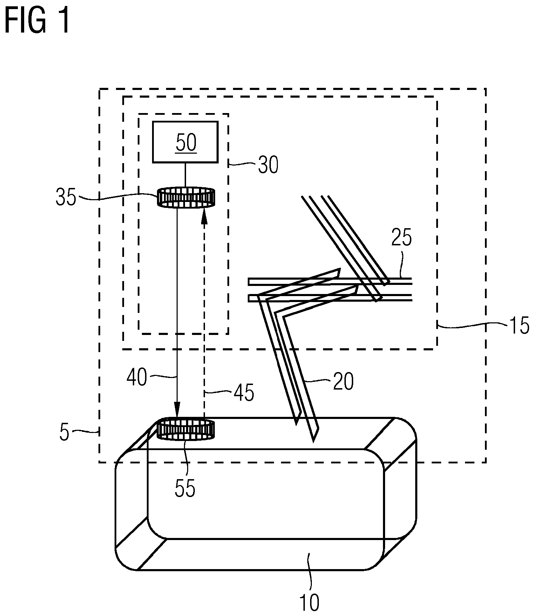

Das in Fig. 1 dargestellte erfindungsgemäße Ladesystem 5 dient zum Laden eines Elektroautos 10. Das Ladesystem umfasst eine erfindungsgemäße Ladestation 15 zum Laden einer Elektrobatterie (nicht gezeigt) des Elektroautos 10.

Das Elektroauto 10 weist einen Pantographen 20 zur Stromabnahme an einer Stromschiene 25 auf. Die Stromschiene 25 ist Teil der Ladestation 15 und stellt den zum Laden erforderlichen Ladestrom bereit. Zum Laden wird das Elektroauto derart positioniert, dass der Pantograph 20 geeignet zur Stromschiene 25 der Ladestation 15 angeordnet ist, sodass der Ladevorgang eingeleitet werden kann.

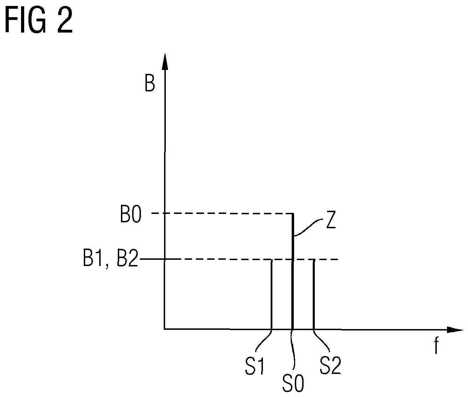

Zur geeigneten Positionierung weist die Ladestation 15 ein erfindungsgemäßes Funkortungssystem 30 auf. Das Funkortungssystem 30 umfasst einen Radarsensor 35. Der Radarsensor 35 ist ausgebildet, ein Radarsignal 40, im dargestellten Ausführungsbeispiel mit einer Frequenz S0 (s. Fig. 2) von 24 Gigahertz, auszusenden und ein reflektiertes Radarsignal als Ortungssignal 45 zu empfangen. Zudem umfasst das Funkortungssystem 30 eine Auswerteinrichtung 50, welche mit dem Radarsensor 35 signalverbunden ist.

Mittels des erfindungsgemäßen Funkortungssystems 30 wird sichergestellt, dass tatsächlich die Position des Elektroautos 10 geprüft wird und nicht etwa die Position eines anderen Objekts. Dazu umfasst das Ladesystem 5 ein Kennzeichnungselement 55, welches an dem Elektroauto 10 angeordnet ist. Das Kennzeichnungselement 55 umfasst eine Metallplatte (nicht eigens dargestellt) und einen piezoelektrischen Oszillator, mittels welchem die Metallplatte auslenkbar an dem Elektroauto 10 angebunden ist. Dazu ist der piezoelektrische Oszillator starr an dem Elektroauto 10 eingespannt. Die Metallplatte hingegen ist an dem freien Ende des piezoelektrischen Oszillators angebunden. Mittels dieser Anordnung wird die Metallplatte oszillierend mit einer Oszillationsfrequenz von drei Kilohertz in Richtung auf den Radarsensors 35 zu und von dem Radarsensor 35 weg auslenkt. Damit bildet das Elektroauto 10 gemeinsam mit dem Kennzeichnungselement 55 ein Objekt mit einer zeitlich variablen Reflexionseigenschaft: Im dargestellten Fall bildet die oszillierend ausgelenkte Metallplatte eine Reflexionsfläche, welche zu einer zeitlichen Variation der Reflexionsphase führt. Der piezoelektrische Oszillator ist im dargestellten Ausführungsbeispiel zur Oszillation bei Beaufschlagung mit der Metallplatte mit einer Oszillationsfrequenz von 3 Kilohertz ausgebildet.

Das erfindungsgemäße Verfahren zur Ortung eines bestimmten Objekts wird mit dem erfindungsgemäßen Ladesystem 5 derart durchgeführt, dass das Elektroauto 10 mittels des Funkortungssystems 30 erkannt wird. Das Verfahren wird im Einzelnen wie folgt durchgeführt:
Der Radarsensor 35 strahlt ein Radarsignal 40 in Richtung des zu ortenden Elektroautos 10. Das Radarsignal 40 trifft auf das Elektroauto 10 und dabei auch insbesondere auf die oszillierend ausgelenkte Metallplatte des Kennzeichnungselements 55. Dabei wird das Radarsignal 40 als - infolge der oszillierenden Reflexionsphase mit der Oszillationsfrequenz des piezoelektrischen Oszillators - moduliertes Ortungssignal 45 reflektiert. Mithin ist das Ortungssignal 45 verglichen mit dem Radarsignal 40 mit einer Oszillationsfrequenz von 3 Kilohertz moduliert. Die Oszillationsfrequenz des piezoelektrischen Oszillators bleibt dabei zeitlich konstant. In weiteren, nicht eigens dargestellten Ausführungsbeispielen ist die Oszillationsfrequenz eine andere Frequenz, beispielsweise eine Frequenz aus dem Bereich von 300 Hertz bis hin zum Ultraschallbereich.

Das Ortungssignal 45 wird vom Radarsensor 35 erfasst und zur Auswertung an die Auswerteinheit 50 übermittelt. Mittels der Auswerteinheit 50 wird eine spektrale Analyse des Ortungssignals 45 vorgenommen:
Das in Fig. 2 dargestellte Spektrum stellt die Beiträge der einzelnen Frequenzen des Ortungssignals 45 in Abhängigkeit der Frequenz f dar. Bei den genannten "Beiträgen" handelt es sich um die jeweiligen Betragsquadrate der Fourierkoeffizienten des Ortungssignals 45 (im Folgenden wird lediglich abkürzend der Begriff *"Beitrag"* verwendet werden). Der zentrale Peak Z entspricht dem dominierenden Beitrag B0 der Frequenz S0 des Radarsignals 40 bei 24 Gigahertz. Infolge der Modulation des Ortungssignals 45 mit der Oszillationsfrequenz des piezoelektrischen Oszillators mit einer Oszillationsfrequenz von 3 Kilohertz treten im Spektrum zusätzlich zu dem zentralen Peak Z Seitenbänder mit Seitenbandfrequenzen S1, S2 auf, wobei die Seitenbandfrequenzen S2 gleich der Summen- und S1 der Differenzfrequenz der Frequenz S0 des Radarsignals 40 sowie der Oszillationsfrequenz des piezoelektrischen Oszillators sind (d.h. im dargestellten Ausführungsbeispiel mit S0 = 24 GHz sind S2 = 24 GHz + 3 KHz und S1 = 24 GHz - 3 KHz).

Mittels der Auswerteinheit 50 wird das Ortungssignal 45 spektral in die Beiträge B0 der Frequenz S0 des Radarsignals 40 sowie die Beiträge B1, B2 des Ortungssignals 45 bei den Seitenbandfrequenzen S1, S2 zerlegt. Die Beiträge B1, B2 bei den Seitenbandfrequenzen S1, S2 werden zunächst arithmetisch gemittelt und dann mit dem Beitrag B0 der Frequenz S0 des Radarsignals 40 ins Verhältnis gesetzt. Übersteigt dieses Verhältnis einen vorbestimmten Schwellwert, so stellt die Auswerteinheit 50 eine Erfassung eines vom Elektroauto 10 abgestrahlten Ortungssignals 45 fest. Liegt kein nennenswertes, d.h. den Schwellwert zumindest erreichendes, Verhältnis von Beiträgen B1, B2 bei den Seitenbandfrequenzen S1, S2 vor, so stellt die Auswerteinheit 50 fest, dass das Ortungssignal 45 nicht vom Elektroauto 10 reflektiert worden ist. Die Laufzeitmessung kann hierbei nach den aus der Literatur bekannten verfahren beispielsweise durch Betrachtung der komplexwertigen Phase des Spektrums des empfangenen Signals oder/und basierend auf FMCW erfolgen.

Mittels des erfindungsgemäßen Verfahrens zur Ortung des Elektroautos 10 wird das erfindungsgemäße Verfahren zur Positionierung des Elektroautos 10 durchgeführt (d.h. es erfolgt bei diesem Verfahren zudem eine Positionsüberprüfung):
Der Radarsensor 35 strahlt stets in eine Richtung, in welcher sich im Idealfalle das Elektroauto 10 im Idealfall befindet, d.h. wenn das Elektroauto 10 zum Laden geeignet positioniert ist, dass Radarsignal 40 ab. Das Ortungssignal 45 wird dabei mittels der Auswerteinrichtung 50 stets auf die Oszillationsfrequenz des piezoelektrischen Oszillators hin überwacht. Wird wie oben ausgeführt dabei festgestellt, dass das Ortungssignal 45 nicht vom Elektroauto 10 reflektiert worden ist, so übermittelt die Auswerteinrichtung 50 ein Signal an eine Steuereinrichtung (nicht dargestellt) der Ladestation 15. Die Steuereinrichtung steuert daraufhin eine Benutzerschnittstelle (nicht dargestellt) der Ladestation 15 derart an, dass die Benutzerschnittstelle einen Fahrer des Elektrofahrzeugs 10 zur Anfahrt an eine zum Laden geeignete Position des Elektrofahrzeugs 10 auffordert. Wird dieser Aufforderung nachgekommen, so wird das Ortungssignal 45 nachfolgend tatsächlich vom Elektrofahrzeug 10 reflektiert, was mittels der Auswerteinrichtung 50 wie beschrieben festgestellt wird.

Nachdem festgestellt worden ist, dass das Ortungssignal 45 tatsächlich vom Elektrofahrzeug 10 reflektiert wird, wird mittels des Ortungssignals 45 eine kontinuierliche Ortung des Elektrofahrzeugs 10 vorgenommen. Mittels dieses Ortungssignals 45 können nunmehr detaillierte Navigationssignale über die Benutzerschnittstelle abgegeben werden, sodass aufgrund des Ortungssignals 45 die Position des Elektroautos 10 zur Stromabnahme an den Stromschienen 25 der Ladestation 15 optimiert werden kann.

Es versteht sich, dass das vorstehend erläuterte Ausführungsbeispiel dahingehend angepasst werden kann, dass die Ladestation 15 nicht notwendig zum Stromschienengebundenen Laden des Elektroautos 10 ausgebildet ist. In einem nicht eigens dargestellten Ausführungsbeispiel können etwa anstelle von Stromschienen 25 und einem Pantographen 20 eine primäre Ladespule an der Ladestation 15 sowie eine sekundäre Ladespule am Elektroauto 10 vorgesehen sein. Im letztgenannten Ausführungsbeispiel wird dann das Elektrofahrzeug 10 an eine solche Position des Elektrofahrzeugs 10 positioniert, dass die relative Positionierung von primärer Ladespule und sekundärer Ladespule zum Laden geeignet erfolgt.

Grundsätzlich kann anstelle eines Radarsensors auch ein Lasersensor mit einer entsprechend höheren Laserfrequenz anstelle der Radarfrequenz herangezogen werden.

In einem nicht eigens dargestellten Ausführungsbeispiel wird anstelle eines Radarsensors ein akustischer Sensor verwendet, welcher analog einem Radarsensor eine Ortung mittels Signallaufzeitmessungen vorzunehmen ausgebildet ist.

## Patentansprüche

1. Verfahren zur Ortung eines bestimmten Objekts (10) mittels eines erfassten Ortungssignals (45), **dadurch gekennzeichnet, dass** bei dem Verfahren eine Ortung genau dieses Objekts (10) derart geprüft wird, dass als Objekt ein solches mit zumindest einer zeitlich variablen Reflexionseigenschaft herangezogen und ein Einfluss (B1, B2) dieser Reflexionseigenschaft auf das erfasste Ortungssignal (45) derart geprüft wird, dass das Objekt mittels der zeitlich variablen Reflexionseigenschaft gekennzeichnet wird und derart gekennzeichnet bei der Ortung eindeutig erkannt wird.

2. Verfahren nach dem vorhergehenden Anspruch, bei welchem die Ortung eine Funkortung oder eine Laserortung oder eine akustische Ortung ist.

3. Verfahren nach einem der vorhergehenden Ansprüche, bei welchem die zeitlich variable Reflexionseigenschaft eine zeitlich periodische Reflexionseigenschaft ist.

4. Verfahren nach einem der vorhergehenden Ansprüche, bei welchem die zeitlich variable Reflexionseigenschaft mittels einer oszillierend ausgelenkten Reflexionsfläche gebildet ist.

5. Verfahren nach einem der vorhergehenden Ansprüche, bei welchem die zeitlich variable Reflexionseigenschaft mittels zumindest einer oszillatorischen oder rotatorischen Bewegung zumindest eines Teils, insbesondere einer Oberfläche, des Objekts (10) gebildet ist.

6. Verfahren nach einem der vorhergehenden Ansprüche, bei welchem die zeitlich variable Reflexionseigenschaft mittels einer Bewegung eines piezoelektrischen Oszillators gebildet ist.

7. Verfahren nach einem der vorhergehenden Ansprüche, bei welchem die Funkortung eine Radarortung und/oder das Ortungssignal ein Radarsignal und/oder das Objekt (10) mit, insbesondere aus, Metall gebildet ist.

8. Verfahren nach einem der vorhergehenden Ansprüche, bei welchem der Einfluss auf das Ortungssignal (45) spektral geprüft wird.

9. Verfahren nach einem der vorhergehenden Ansprüche, bei welchem der Einfluss der variablen Reflexionseigenschaft im Bereich einer Frequenz (S0 S1, S2) oder von Frequenzen (S1, S2) von mindestens 300 Hz, vorzugsweise höchstens 1 Mhz, auf das Ortungssignal (45) geprüft wird.

10. Verfahren zur Positionierung eines Elektrofahrzeugs an einer Ladestation (15), bei welchem eine Position des Elektrofahrzeugs mittels eines Verfahrens zur Ortung nach einem der vorhergehenden Ansprüche erfasst wird, wobei das Objekt (10) zumindest einen Teil des Elektrofahrzeugs umfasst und/oder zumindest zum Teil an dem Fahrzeug angeordnet ist.

11. Ortungssystem, aufweisend einen Ortungssensor (35) zur Ortung eines Objekts (10) mittels eines von einem Ortungssensor (35) erfassten Ortungssignals (45) sowie eine Auswerteinrichtung (50), welche ausgebildet ist, einen Einfluss einer zeitlich variablen Reflexionseigenschaft des Objekts (10) auf das vom Ortungssensor (35) erfasste Ortungssignal (45) zu prüfen, wobei ein Verfahren nach einem der Ansprüche 1 bis 10 durchgeführt wird.

12. Ladestation zum Laden eines Elektrofahrzeugs, welche zur Positionierung des Elektrofahrzeugs ein Ortungssystem (30) nach Anspruch 11 umfasst, wobei die Ladestation (15) vorzugsweise zum induktiven Laden des Elektrofahrzeugs ausgebildet ist.

13. Ladesystem mit einer Ladestation (15) nach einem der vorhergehenden Ansprüche und einem Kennzeichnungselement (55), welches, insbesondere periodisch, relativ zueinander bewegliche Teile umfasst.

14. Ladesystem nach dem vorhergehenden Anspruch, bei welchem das Kennzeichnungselement (55) einen, insbesondere piezoelektrischen, Oszillator umfasst, welcher mit einer Oszillationsfrequenz, insbesondere von mindestens 300 Hz, schwingt.

## Claims

1. Method for locating a specific object (10) by means of a detected locating signal (45), **characterized in that**, in the method, locating of precisely this object (10) is checked in such a way that the object used is one having at least one temporally variable reflection property, and an influence (B1, B2) of this reflection property on the detected locating signal (45) is checked in such a way that the object is identified by means of the temporally variable reflection property and, thereby identified, is recognized unambiguously in the locating.

2. Method according to the preceding claim, wherein the locating is radio locating or laser locating or acoustic locating.

3. Method according to either of the preceding claims, wherein the temporally variable reflection property is a temporally periodic reflection property.

4. Method according to any of the preceding claims, wherein the temporally variable reflection property is formed by means of an oscillatorily deflected reflection surface.

5. Method according to any of the preceding claims, wherein the temporally variable reflection property is formed by means of at least one oscillatory or rotatory movement of at least one part, in particular of a surface, of the object (10).

6. Method according to any of the preceding claims, wherein the temporally variable reflection property is formed by means of a movement of a piezoelectric oscillator.

7. Method according to any of the preceding claims, wherein the radio locating is radar locating and/or the locating signal is a radar signal and/or the object (10) is formed with, in particular from, metal.

8. Method according to any of the preceding claims, wherein the influence on the locating signal (45) is checked spectrally.

9. Method according to any of the preceding claims, wherein the influence of the variable reflection property in the range of a frequency (S0, S1, S2) or of frequencies (S1, S2) of at least 300 Hz, preferably at most 1 MHz, on the locating signal (45) is checked.

10. Method for positioning an electric vehicle at a charging station (15), wherein a position of the electric vehicle is detected by means of a method for locating according to any of the preceding claims, wherein the object (10) comprises at least one part of the electric vehicle and/or is arranged at least partly on the vehicle.

11. Locating system, having a locating sensor (35) for locating an object (10) by means of a locating signal (45) detected by a locating sensor (35), and also having an evaluation device (50) configured to check an influence of a temporally variable reflection property of the object (10) on the locating signal (45) detected by the locating sensor (35), wherein a method according to any of Claims 1 to 10 is performed.

12. Charging station for charging an electric vehicle, said charging station comprising a locating system (30) according to Claim 11 for positioning the electric vehicle, wherein the charging station (15) is preferably configured for inductively charging the electric vehicle.

13. Charging system comprising a charging station (15) according to any of the preceding claims and an identification element (55) comprising parts which are movable, in particular periodically, relative to one another.

14. Charging system according to the preceding claim, wherein the identification element (55) comprises an, in particular piezoelectric, oscillator which oscillates at an oscillation frequency, in particular of at least 300 Hz.

## Revendications

1. Procédé de localisation d'un objet déterminé (10) au moyen d'un signal de localisation détecté (45), **caractérisé en ce que**, dans le procédé, une localisation de cet objet précis (10) est contrôlée de telle sorte que l'on utilise comme objet un objet ayant au moins une propriété de réflexion variable dans le temps et que l'on contrôle une influence (B1, B2) de cette propriété de réflexion sur le signal de localisation détecté (45) de telle sorte que l'objet est caractérisé au moyen de la propriété de réflexion variable dans le temps et est identifié de manière univoque lors de la localisation.

2. Procédé selon la revendication précédente, dans lequel la localisation est une localisation par radio ou une localisation par laser ou une localisation acoustique.

3. Procédé selon l'une quelconque des revendications précédentes, dans lequel la propriété de réflexion variable dans le temps est une propriété de réflexion périodique dans le temps.

4. Procédé selon l'une des revendications précédentes, dans lequel la propriété de réflexion variable dans le temps est formée au moyen d'une surface de réflexion déviée de manière oscillante.

5. Procédé selon l'une des revendications précédentes, dans lequel la propriété de réflexion variable dans le temps est formée au moyen d'au moins un mouvement oscillatoire ou rotatif d'au moins une partie, en particulier une surface, de l'objet (10).

6. Procédé selon l'une quelconque des revendications précédentes, dans lequel la propriété de réflexion variable dans le temps est formée au moyen d'un mouvement d'un oscillateur piézoélectrique.

7. Procédé selon l'une des revendications précédentes, dans lequel la radiolocalisation est une localisation radar et/ou le signal de localisation est un signal radar et/ou l'objet (10) est formé, en particulier de métal.

8. Procédé selon l'une quelconque des revendications précédentes, dans lequel l'influence sur le signal de localisation (45) est contrôlée de manière spectrale.

9. Procédé selon l'une des revendications précédentes, dans lequel on vérifie l'influence de la propriété de réflexion variable dans la plage d'une fréquence (S0 S1, S2) ou de fréquences (S1, S2) d'au moins 300 Hz, de préférence d'au plus 1 MHz, sur le signal de localisation (45).

10. Procédé de positionnement d'un véhicule électrique sur une borne de recharge (15), dans lequel une position du véhicule électrique est détectée au moyen d'un procédé de localisation selon l'une des revendications précédentes, l'objet (10) comprenant au moins une partie du véhicule électrique et/ou étant disposé au moins en partie sur le véhicule.

11. Système de localisation, présentant un capteur de localisation (35) pour la localisation d'un objet (10) au moyen d'un signal de localisation (45) détecté par un capteur de localisation (35), ainsi qu'un dispositif d'évaluation (50) qui est conçu pour vérifier une influence d'une propriété de réflexion variable dans le temps de l'objet (10) sur le signal de localisation (45) détecté par le capteur de localisation (35), un procédé selon l'une des revendications 1 à 10 étant mis en œuvre.

12. Station de charge pour charger un véhicule électrique, qui comprend un système de localisation (30) selon la revendication 11 pour positionner le véhicule électrique, la station de charge (15) étant de préférence conçue pour charger le véhicule électrique par induction.

13. Système de charge comprenant une station de charge (15) selon l'une des revendications précédentes et un élément d'identification (55) qui comprend, notamment périodiquement, des parties mobiles les unes par rapport aux autres.

14. Système de charge selon la revendication précédente, dans lequel l'élément d'identification (55) comprend un oscillateur, notamment piézoélectrique, qui oscille à une fréquence d'oscillation, notamment d'au moins 300 Hz.
